# FASCICULE DE BREVET EUROPEEN

(11) **EP 0 388 263 B1**
(45) Date de publication et mention de la délivrance du brevet: **06.10.1993**
(21) Numéro de dépôt: 90400635.0
(22) Date de dépôt: 09.03.1990
(51) Int. Cl.: B23Q 35/34, B23C 3/12

(54) **Dispositif d'usinage de contours non rectilignes de pièces mécaniques et notamment de chanfreinage de contours non plans**
Vorrichtung zum Bearbeiten von Werkstücken mit gekrümmten Konturen, insbesondere zum Anfasen gekrümmter Konturen
Device for working up curved edges of a workpiece, particularly for chamfering a curve

(30) Priorité: 14.03.1989 FR 8903316
(43) Date de publication de la demande: 19.09.1990
(73) Titulaire: COMMISSARIAT A L'ENERGIE ATOMIQUE, 75015 Paris Cédex 15 (FR)
(72) Inventeur: Sgarbi, Frédéric, F-75016 Paris (FR); Ferard, Michel, F-78500 Sartrouville (FR)
(74) Mandataire: Mongrédien, André

(56) Documents cités:
- CH-A- 354 002
- CH-A- 519 658
- DE-A- 1 453 214
- DE-A- 1 588 424
- DE-A- 1 957 508
- DE-A- 3 213 550
- DE-A- 3 220 770
- GB-A- 534 714
- GB-A- 534 714
- JP-A-54 136 488
- JP-A-59 214 509
- JP-A-60 131 106

## Description

L'invention est relative à un dispositif d'usinage de contours non rectilignes de pièces mécaniques utilisable notamment en usinage robotisé de chanfreinage de contours qui peuvent être de forme quelconque dans l'espace.

Le but essentiel recherché et atteint avec l'invention consiste à pouvoir faire suivre à un bras de robot un contour de forme inconnue et qui n'a donc pas pu être enseignée au robot.

Dans le cas où le contour est simplement sinueux mais reste cependant inclus dans un plan dans lequel un outil rotatif d'usinage, muni d'un support fixé à l'extrémité du bras, est déplacé, le dispositif peut simplement comprendre deux systèmes indépendants de mesure de la position de l'outil par rapport au contour, situés de part et d'autre de l'outil le long du contour, chaque système comprenant une barre, deux bielles parallèles et de même longueur articulées sur la barre et le support d'outil de manière à maintenir la barre parallèle à l'axe de rotation de l'outil, un ressort entre la barre et le support d'outil tendant à déplacer la barre pour l'appuyer sur le contour, et au moins un capteur mesurant la position de l'outil par rapport à la barre.

Si cependant le contour de la pièce est gauche, les systèmes de mesure doivent comprendre en outre un capteur de la position du contour par rapport à la barre, et même deux s'il faut également régler l'inclinaison de l'outil par rapport à la pièce. Tous ces capteurs peuvent être des capteurs de proximité de type inductif.

Un système original de commande d'effort de l'outil sur le contour est également proposé et fait partie de l'invention. Il est constitué d'un vérin dont la tige porte le support d'outil, et dont une première chambre, dont l'accroissement de volume correspond à un déplacement de l'outil vers le contour, est reliée à une source de gaz comprimé par une première conduite.

Cette disposition permet en effet, comme on va le voir, des temps de réaction beaucoup plus rapides qu'avec les systèmes classiques qui risqueraient de conduire ici à des instabilités de l'asservissement pour des pièces de contour trop compliqué.

On peut utiliser une seconde conduite reliant la seconde chambre du vérin à la source de gaz comprimé, les conduites étant alors associées par une vanne de commutation ; on peut encore établir un capteur de déplacement ou un amortisseur entre la tige du vérin et son cylindre ainsi qu'une fuite calibrée ou une bouteille sur la première conduite.

Parmi les documents de l'art antérieur, le brevet GB-A-534 714 décrit un système dans lequel des tiges de palpage règlent l'éloignement entre un chalumeau à l'oxygène et une surface à découper. Les tiges encadrent le chalumeau et coulissent parallèlement à son axe. Cependant, les tiges sont toutes reliées entre elles, s'appuient sur une surface par leur extrémité, et le chalumeau ne peut être considéré comme un outil rotatif d'usinage de contour. Le brevet CH-A-354 002 décrit quant à lui un système de détection de contour de modèle pour une machine à copier. Ce système comprend deux tiges tournantes, découplées et qui se suivent le long du contour. Il n'y a pas d'outil entre les tiges, et surtout les tiges tournantes excluent d'utiliser ce système pour le repérage de contours non plans ou de hauteur inconnue, car toute variation de la hauteur du contour palpé entraîne une modification de l'angle des tiges et donc de la position estimée du contour. Les tiges parallèles à l'axe de rotation de l'outil et nécessaires à une réalisation correcte de l'invention permettent d'éliminer cette difficulté.

Comme de surcroît les deux brevets de l'art antérieur concernent des dispositifs qui ne présentent presque aucun élément commun, il ne semble pas possible de reconstituer aisément l'invention grâce à eux.

L'invention va maintenant être décrite plus en détail à l'aide des figures suivantes dont l'énumération suit et qui sont données à titre illustratif et non limitatif d'une réalisation possible :

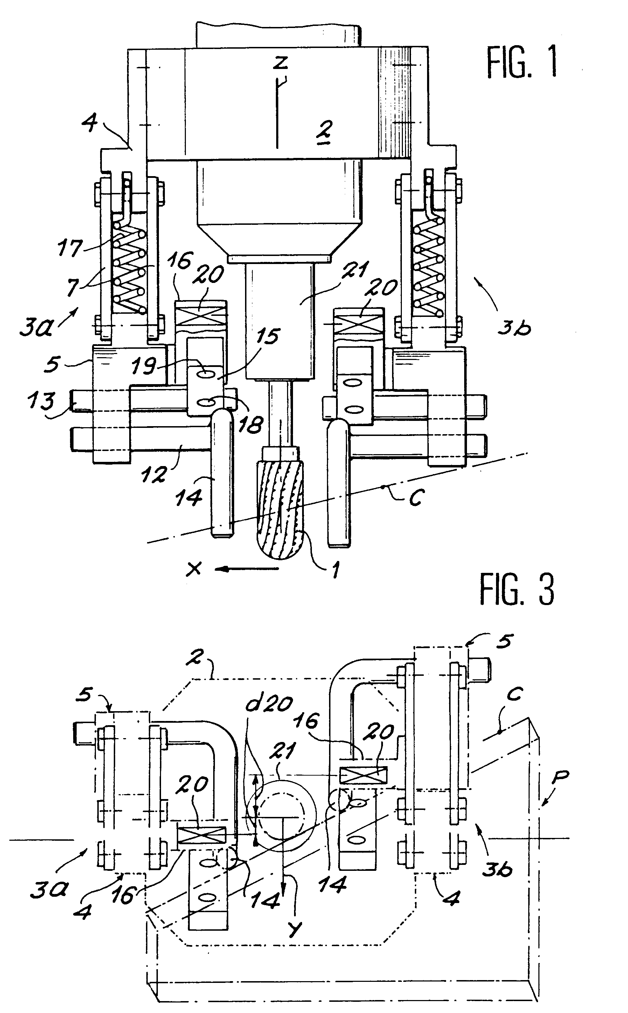

- les figures 1, 2 et 3 représentent des vues de face, de côté et de dessus de l'outil d'usinage et des pièces connexes, en particulier des systèmes de mesure ; et
- la figure 4 schématise les moyens utilisés pour la commande d'effort.

Les trois premières figures représentent tout d'abord l'outil d'usinage qui est ici une fraise 1. La fraise 1 tourne autour d'un axe de rotation Z grâce à un moteur non représenté installé dans un support d'outil 2. On définit en outre deux autres axes X et Y pour constituer un repère orthogonal.

Une pièce mécanique P a un contour C qu'il convient de chanfreiner et qui est de forme et d'orientation quelconques et d'ailleurs inconnues du système de commande de la fraise 1. Il est donc nécessaire de mesurer et de calculer à tout instant les déplacements suivant les axes X et Y à appliquer à la fraise 1 pour assurer une avance et une profondeur de passe correctes tout en la déplaçant au moins périodiquement suivant l'axe Z pour tenir compte des variations d'altitude du contour C.

On y parvient au moyen de deux systèmes de mesure de la position de l'outil, référencés 3a et 3b, qui sont situés de part et d'autre de l'outil 1 dans la direction de son mouvement d'avance le long du contour C et dont un seul va être décrit en détail puisqu'ils sont en fait avantageusement formés des mêmes constituants et disposés symétriquement par rapport au plan défini par les axes Y et Z.

Chacun de ces systèmes 3a et 3b comprend tout d'abord un appendice 4 fixé au support d'outil 2, un manche coudé 5, deux bielles 6 et 7 (ici présentes par paires) articulées chacune à l'appendice 4 et au manche 5 par des articulations respectives 8, 9 et 10, 11, les bielles 6 et 7 étant en outre parallèles et de même longueur pour constituer une liaison de pantographe. Deux tiges 12 et 13, dont la première porte une barre 14 parallèle à la fraise 1 et la seconde un premier boîtier de capteurs 15, sont accrochées à chaque manche coudé 5; enfin, un second boîtier de capteur 16 est fixé directement au manche coudé 5.

La barre 14 palpe le contour C et est donc repoussée vers ce dernier à l'aide d'un ressort 17 tendu entre l'appendice 4 et le manche 5 : comme les bielles 6 et 7 sont inclinées, le rapprochement du manche coudé 5 et de l'appendice 4, provoqué par le ressort 17, se traduit par un déplacement transversal, sans rotation, de la barre 14 vers le contour C.

Le premier boîtier de capteurs 15 contient deux capteurs 18 et 19 constitués chacun d'un bobinage inductif dont les axes, parallèles entre eux, sont orientés vers la pièce mécanique P. Comme il est bien connu, les distances d18 et d19 de ces capteurs à la pièce mécanique P peuvent être mesurées grâce aux variations des courants induits qui parcourent les bobinages.

Le second boîtier de capteur 16 contient un troisième de ces capteurs proximétriques à bobinage inductif, référencé par 20, et dont l'axe est quant à lui orienté parallèlement à l'axe X, en direction d'un capot cylindrique 21 fixé au support d'outil 2 et concentrique à la fraise 1. Le capteur 20 mesure donc la distance qui le sépare du capot 21, dont on peut déduire la composante d20 orientée suivant l'axe Y ou encore la distance, projetée sur ce même axe Y, de la barre 14 à la fraise 1.

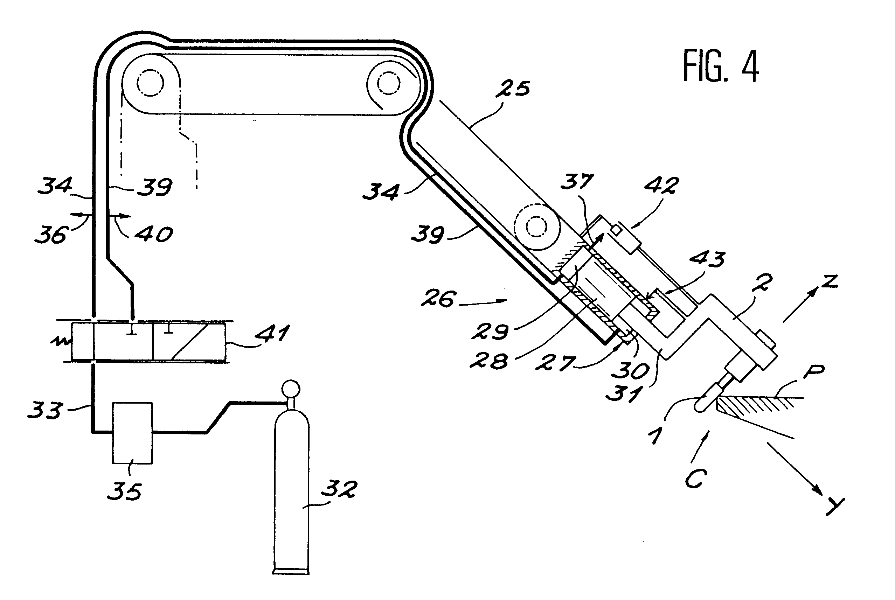

Le processus de suivi du contour C utilise les deux systèmes de mesure 3a et 3b. Tout d'abord, comme on le voit bien sur la figure 3, la comparaison des deux indications d20 fournies par les deux capteurs 20, qui sont différentes pour les deux systèmes 3a et 3b, permet de déduire si la fraise 1 est pressée par le bras du robot qui tient le support 2 (voir la figure 4) dans une direction perpendiculaire au contour C.

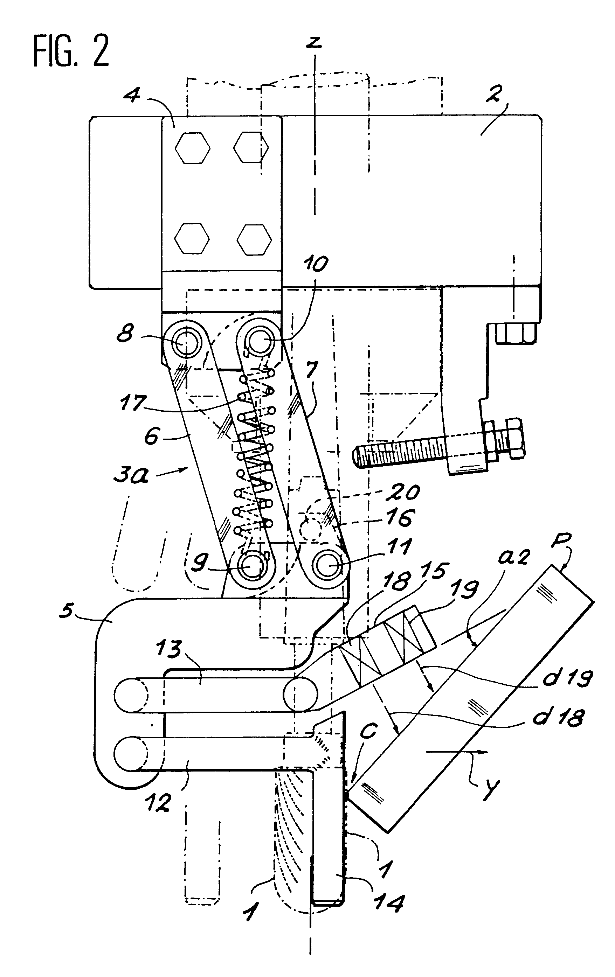

La figure 2 montre que la comparaison des distances d18 et d19 des capteurs correspondants d'un au moins des systèmes de mesure 3a ou 3b permet de déduire l'angle a2 que fait la pièce mécanique P avec le premier boîtier de mesure 15 dans le plan défini par les axes Y et Z, c'est-à-dire indirectement avec la fraise 1. Cette comparaison permet donc de commander efficacement la rotation de l'outil 1 suivant l'axe X pour ajuster l'angle de chanfreinage.

Enfin, la comparaison des mesures des deux capteurs 18 entre eux, ou des capteurs 19 entre eux, permet d'évaluer la pente du contour C, c'est-à-dire l'angle que fait ce contour dans le plan défini par les axes X et Z avec l'axe Z (à 90° près). La moyenne des mesures des capteurs 18 et 19 permet d'estimer la position du point de contact de la fraise 1 avec le contour C par rapport à l'axe de la fraise 1. Il est ainsi possible de commander efficacement des translations de la fraise 1 suivant l'axe Z ou des rotations de cette même fraise 1 autour des axes X, Y ou parallèles à Z.

En cas de variation brusque de la direction du contour C, le système de mesure 3a, qui précède la fraise 1 sur sa trajectoire, est concerné par cette variation avant elle, ce qui fait que les corrections nécessaires de la trajectoire de la fraise 1 sont prises en compte à temps même à une bonne vitesse d'avance.

Les capteurs décrits sont tous basés sur des mesures de courants de Foucault. On pourrait aussi, parmi d'autres possibilités, remplacer les capteurs 20 par des bobines de self-induction et équiper l'axe de la fraise 1 d'un aimant permanent : c'est alors la force contre-électromotrice qui serait mesurée sur les bobines suivant l'éloignement de l'aimant, en connaissant la vitesse de rotation. Les couplages magnétiques résultants obligeraient toutefois à remplacer les capteurs 18 et 19 par des capteurs à mesures optiques.

Tous les calculs sont faits par un ordinateur non représenté intégré au système de commande d'un robot dont une partie est représentée figure 4. Cette partie, originale, va maintenant être décrite pour montrer comment utiliser efficacement les indications fournies par les systèmes de mesure 3a et 3b.

Le système classique de commande d'un outil en effort, qui utilise un mécanisme d'accouplement de raideur ajustable entre le poignet du robot et l'outil joint à un capteur d'effort commandant l'asservissement en position du poignet, est en effet peu envisageable dans la plupart des cas où l'invention s'applique car ce système est lent et risque de conduire à des instabilités de commande d'outil pour peu que la raideur de la boucle d'asservissement d'effort augmente. La raideur est recherchée afin de suivre efficacement des contours peu réguliers.

Le système proposé ici est monté à l'extrémité du poignet du bras du robot 25 et comprend un vérin pneumatique 26 formé classiquement d'un cylindre 27 dans lequel coulisse un piston 28 séparant l'intérieur du cylindre 27 en deux chambres 29 et 30. Une tige 31 orientée suivant l'axe Y est par ailleurs fixée au piston 28 et porte le support d'outil 2. On notera que la fraise 1 est dans le prolongement de la tige 31 afin d'éliminer les porte-à-faux nuisibles.

L'effort de la fraise 1 sur le contour C est appliqué grâce à la pression provenant d'une source d'air comprimé 32 qui passe dans une conduite amont 33, puis dans une conduite 34 qui communique avec la première chambre 29, dont l'accroissement de volume correspond à un déplacement de la tige 31 et de la fraise 1 en direction du contour C. Cet effort tend vers une valeur constante quelle que soit la position du piston 28 dans le cylindre 27 car sa surface est invariable, de même que la pression régnant dans la source 32. La course et la mobilité du piston 28 permettent de s'adapter à des variations rapides et importantes de la forme du contour C.

Des irrégularités de l'effort appliqué sont cependant inévitables quand le piston 28 est déplacé dans le cylindre 27. Diverses dispositions ont été prises pour limiter ces irrégularités. C'est ainsi qu'une bouteille 35 est disposée sur la conduite amont 33 et produit un effet capacitif : le volume du circuit pneumatique est fortement augmenté, si bien qu'un déplacement brusque du piston 28 provoque des variations de pression et donc d'effort moins importantes. Des fuites référencées 36 et 37 et qui peuvent être disposées sur la conduite 34 ou directement sur la première chambre 29 jouent le même rôle modérateur grâce à la variation du débit de fuite dans le circuit pneumatique en cas de variation de pression, qui ramène plus rapidement la pression à sa valeur stable. Les fuites 36 et 37 ont été symbolisées sur la figure 4 et peuvent en réalité consister en valves ou robinets éventuellement réglables.

Dans la réalisation décrite, la seconde chambre 30 peut également communiquer par l'intermédiaire d'une autre conduite 39 -munie également d'une fuite 40- avec la conduite amont 33 par l'intermédiaire d'une vanne de commutation 41. La vanne de commutation 41 fait généralement communiquer la source 32 avec la première chambre 29 pour appliquer l'effort de chanfreinage, mais elle est occasionnellement commutée pour faire communiquer la seconde chambre 30 avec la source 32 afin de réaliser un retrait de la fraise 1. Dans les deux cas, l'air contenu dans la chambre qui n'est pas en communication avec la source 32 s'échappe par les fuites.

Ce système de commande d'effort peut être perfectionné en établissant un amortisseur 42 entre la tige 31 et le cylindre 27 du vérin 26. On peut également établir entre ces mêmes pièces un capteur de déplacement 43 du type à potentiomètre linéaire qui permet de repérer si le piston 28 arrive en bout de course pour corriger alors la position du poignet 25.

## Revendications

1. Dispositif d'usinage de contours non rectilignes (C) de pièces mécaniques (P) comprenant un outil rotatif (1), caractérisé par deux systèmes indépendants de mesure (3) de la position de l'outil (1) par rapport au contour (C), situés de part et d'autre de l'outil (1) le long du contour (C), chaque système (3) comprenant une barre (14), deux bielles parallèles (6, 7) et de même longueur articulées sur la barre et une pièce de support (2) de l'outil (1) de manière à maintenir la barre parallèle à l'axe de rotation de l'outil, un ressort (17) entre la barre (14) et le support (2) d'outil tendant à déplacer la barre (14) pour l'appuyer sur le contour (C), et au moins un capteur (20) mesurant la position de l'outil (1) par rapport à la barre (14).

2. Dispositif d'usinage de contours non rectilignes de pièces mécaniques suivant la revendication 1, caractérisé en ce que les systèmes de mesure (3) comprennent en outre au moins un capteur (18, 19) de la position du contour (C) par rapport à la barre (14).

3. Dispositif d'usinage de contours non rectilignes de pièces mécaniques suivant la revendication 2, caractérisé en ce que les capteurs (18, 19) de la position du contour (C) par rapport à la barre (14) sont au nombre de deux.

4. Dispositif d'usinage de contours non rectilignes de pièces mécaniques suivant l'une quelconque des revendications 1 à 3, caractérisé en ce que les capteurs sont des capteurs de proximité de type inductif.

5. Dispositif d'usinage de contours non rectilignes de pièces mécaniques suivant l'une quelconque des revendications 1 à 4, caractérisé en ce que les systèmes de mesure (3a, 3b) sont de constitution identique et de disposition symétrique par rapport à l'outil (1).

6. Dispositif d'usinage de contours non rectilignes de pièces mécaniques suivant l'une quelconque des revendications 1 à 5, caractérisé en ce qu'il comprend en outre un système presseur de l'outil (1) sur le contour (C) constitué d'un vérin (26) dont la tige (31) porte le support (2) d'outil et dont une première chambre (29), dont l'accroissement de volume correspond à un déplacement de l'outil (1) vers le contour (C), est reliée à une source de gaz comprimé (32) par une première conduite (33, 34).

7. Dispositif d'usinage de contours non rectilignes suivant la revendication 6, caractérisé en ce que la seconde chambre (30) du vérin (26) est également reliée à la source de gaz comprimé (32) par une seconde conduite (33, 39), les deux conduites étant associées entre elles par une vanne de commutation (41) faisant communiquer la source de gaz comprimé à l'une ou l'autre chambre.

8. Dispositif d'usinage de contours non rectilignes de pièces mécaniques suivant l'une quelconque des revendications 6 ou 7, caractérisé en ce que la tige de vérin (31) est munie d'un capteur de déplacement (43) par rapport au cylindre (27) du vérin (26).

9. Dispositif d'usinage de contours non rectilignes de pièces mécaniques suivant l'une quelconque des revendications 6 à 8, caractérisé par une fuite calibrée (34, 37) établie sur la première chambre ou la première conduite.

10. Dispositif d'usinage de contours non rectilignes de pièces mécaniques suivant l'une quelconque des revendications 6 à 9, caractérisé par une bouteille (35) établie sur la première conduite (33).

11. Dispositif d'usinage de contours non rectilignes de pièces mécaniques suivant l'une quelconque des revendications 6 à 10, caractérisé par un amortisseur (42) s'étendant entre la tige (31) et le cylindre (27) du vérin (26).

## Patentansprüche

1. Vorrichtung zum Bearbeiten nicht geradliniger Konturen (C) mechanischer Werkstücke (P), ein rotierendes Werkzeug (1) umfassend, gekennzeichnet durch zwei unabhängige Meßsysteme (3) der Position des Werkzeugs (1) im Verhältnis zur Kontur (C) angeordnet beiderseits des Werkzeugs (1) längs der Kontur (C), wobei jedes System (3) einen Stab (14), zwei Pleuel (6, 7) von gleicher Länge an dem Stab gelenkig angeschlossen, und einen Halter (2) des Werkzeugs (1) dergestalt daß der Stab parallel zur Rotationsachse des Werkzeugs gehalten wird, eine Feder (17) zwischen dem Stab (14) und dem Halter (2) des Werkzeugs welche tendiert den Stab (14) zu verschieben um ihn an der Kontur (2) abzustützen, und mindestens einen die Position des Werkzeugs (1) im Verhältnis zu dem Stab (14) messenden Aufnehmer (20) umfaßt.

2. Vorrichtung zum Bearbeiten nicht geradliniger Konturen mechanischer Werkstücke nach Anspruch 1, dadurch gekennzeichnet, daß das Meßsystem unter anderem mindestens einen Aufnehmer (18, 19) der Position der Kontur (C) im Verhältnis zu dem Stab (14) umfaßt.

3. Vorrichtung zum Bearbeiten nicht geradliniger Konturen mechanischer Werkstücke nach Anspruch 2, dadurch gekennzeichnet, daß die Aufnehmer (18, 19) der Position der Kontur (C) im Verhältnis zu dem Stab (14) zwei Stück sind.

4. Vorrichtung zum Bearbeiten nicht geradliniger Konturen mechanischer Werkstücke nach irgend einem der Ansprüche 1 bis 3, dadurch gekennzeichnet, daß die Aufnehmer vom Typ induktiver Aufnehmer sind.

5. Vorrichtung zum Bearbeiten nicht geradliniger Konturen mechanischer Werkstücke nach irgend einem der Ansprüche 1 bis 4, dadurch gekennzeichnet, daß die Meßsysteme (3a, 3b) von gleicher Zusammensetzung und symmetrisch im Verhältnis zum Werkzeug (1) angeordnet sind.

6. Vorrichtung zum Bearbeiten nicht geradliniger Konturen mechanischer Werkstücke nach irgend einem der Ansprüche 1 bis 4, dadurch gekennzeichnet, daß sie unter anderem ein System zum anpressen des Werkzeugs (1) an die Kontur (C) umfaßt, bestehend aus einer Winde (26) deren Kolbenstange (31) den Halter (2) des Werkzeugs und eine erste Kammer (29) trägt, wobei die Vergrößerung des Volumens verbunden mit einer Quelle komprimiertem Gas (32) durch eine erste Leitung (33, 34), einer Bewegung des Werkzeugs (1) in Richtung Kontur (C) entspricht.

7. Vorrichtung zum Bearbeiten nicht geradliniger Konturen mechanischer Werkstücke nach Anspruch 6, dadurch gekennzeichnet, daß die zweite Kammer (30) der Winde (26) ebenfalls mit der Quelle des komprimierten Gases (32) durch eine zweite Leitung (33, 39) verbunden ist, wobei die beiden Leitungen durch ein Umschaltventil (41) welches das komprimierte Gas in die eine oder andere Kammer leitet miteinander verbunden sind.

8. Vorrichtung zum Bearbeiten nicht geradliniger Konturen mechanischer Werkstücke nach irgend einem der Ansprüche 6 oder 7, dadurch gekennzeichnet, daß die Kolbenstange (31) der Winde mit einem Aufnehmer (43) der Bewegung im Verhältnis des Zylinders (27) zur Winde (26) bestückt ist.

9. Vorrichtung zum Bearbeiten nicht geradliniger Konturen mechanischer Werkstücke nach irgend einem der Ansprüche 6 bis 8, durch eine kalibrierte Öffnung (34, 37) in der ersten Kammer oder ersten Leitung gekennzeichnet.

10. Vorrichtung zum Bearbeiten nicht geradliniger Konturen mechanischer Werkstücke nach irgend einem der Ansprüche 6 bis 9, durch eine mit der ersten Leitung verbundene Flasche (35) gekennzeichnet.

11. Vorrichtung zum Bearbeiten nicht geradliniger Konturen mechanischer Werkstücke nach irgend einem der Ansprüche 6 bis 10, durch einen zwischen der Kolbenstange (31) und dem Zylinder (27) der Winde (26) angeordneten Dämpfer gekennzeichnet.

## Claims

1. Device for machining non-rectilinear outlines (C) of mechanical components (P) comprising a rotary tool (1), characterised by two independent systems (3) for measuring the position of the tool (1) with respect to the outline (C), located on each side of the tool (1) along the outline (C), each system (3) comprising a bar (14), two parallel connecting rods (6, 7) of the same length articulated onto the bar and a component (2) for supporting the tool (1) so as to hold the bar parallel to the rotation axis of the tool, a spring (17) between the bar (14) and the tool support (2) tending to move the bar (14) to press it onto the outline (C), and at least one sensor (20) measuring the position of the tool (1) with respect to the bar (14).

2. Device for machining non-rectilinear outlines of mechanical components according to Claim 1, characterised in that the measuring systems (3) further comprise at least one sensor (18, 19) for the position of the outline (C) with respect to the bar (14).

3. Device for machining non-rectilinear outlines of mechanical components according to Claim 2, characterised in that the sensors (18, 19) for the position of the outline (C) with respect to the bar (14) are two in number.

4. Device for machining non-rectilinear outlines of mechanical components according to any one of Claims 1 to 3, characterised in that the sensors are inductive-type proximity sensors.

5. Device for machining non-rectilinear outlines of mechanical components according to any one of Claims 1 to 4, characterised in that the measuring systems (3a, 3b) are of identical constitution and arranged symmetrically with respect to the tool (1).

6. Device for machining non-rectilinear outlines of mechanical components according to any one of Claims 1 to 5, characterised in that it further comprises a system for pressing the tool (1) onto the outline (C), made up of a thruster (26) the rod (31) of which carries the tool support (2) and a first chamber (29) of which, the increase of whose volume corresponds to a movement of the tool (1) towards the outline (C), is connected to a source of compressed gas (32) via a first pipe (33, 34).

7. Device for machining non-rectilinear outlines according to Claim 6, characterised in that the second chamber (30) of the thruster (26) is also connected to the source of compressed gas (32) by a second pipe (33, 39), the two pipes being associated with one another via a switch-over valve (41) causing the source of compressed gas to communicate with one or other chamber.

8. Device for machining non-rectilinear outlines of mechanical components according to either one of Claims 6 and 7, characterised in that the thruster rod (31) is fitted with a sensor (43) of movement with respect to the cylinder (27) of the thruster (26).

9. Device for machining non-rectilinear outlines of mechanical components according to any one of Claims 6 to 8, characterised by a calibrated leak-off (34, 37) set up on the first chamber or the first pipe.

10. Device for machining non-rectilinear outlines of mechanical components according to any one of Claims 6 to 9, characterised by a bottle (35) set up on the first pipe (33).

11. Device for machining non-rectilinear outlines of mechanical components according to any one of Claims 6 to 10, characterised by a damper (42) extending between the rod (31) and the cylinder (27) of the thruster (26).
